# EUROPEAN PATENT APPLICATION

(11) **EP 2 022 763 A1**
(43) Date of publication of application: **11.02.2009**
(21) Application number: 06745862.0
(22) Date of filing: 28.04.2006
(51) Int. Cl.: C02F 3/12, C02F 1/44, C02F 11/02

(54) **METHOD AND APPARATUS FOR BIOLOGICALLY TREATING ORGANIC DISCHARGED WATER**

(71) Applicant: Kurita Water Industries Ltd., Tokyo 106-8383 (JP)
(72) Inventor: FUJISHIMA, Shigeki, Tokyo 160-8383 (JP)
(74) Representative: Bertsch, Florian Oliver
(86) International application number: PCT/JP2006/309003
(87) International publication number: WO 2007/125598

(57) **Abstract**

In a single-tank activated sludge process or a multistage activated-sludge process using predation action of animalcules, an improvement in treatment efficiency and a decrease in the amount of excess sludge generation are achieved, while maintaining stable treated water qualities. In a biological treatment wherein organic wastewater is introduced to a first biological treatment tank 1A and is biologically treated with bacteria, the treatment liquid containing the bacteria in the first biological treatment tank 1A is introduced to a second biological treatment tank 1B and is activated-sludge treated, and the treatment liquid from the second biological treatment tank 1B is separated into sludge and treated water, a portion of the sludge in the second biological treatment tank 1B and/or at least a portion of the separated sludge is introduced into a sludge treatment tank 3 having a submerged filter element 4 with a pore diameter of 5 to 100 µm in the tank and is subjected to aerobic biological treatment, and the liquid permeated through the submerged filter element 4 is returned to the first biological treatment tank 1A and/or the second biological treatment tank 1B. Both high effect of reduction in the amount of sludge and satisfactory treated water qualities can be simultaneously achieved by reducing the amount of sludge with animalcules in the sludge treatment tank 3, allowing residual fine components to permeate through the submerged filter element 4, and, again, returning the fine components to the filter predation animalcule tank 1B for predation.

## Description

### Technical Field

The present invention relates to a method and equipment for biological treatment of domestic wastewater, sewage, and organic wastewater from, for example, food factories and pulp factories.

### Background Art

An activated sludge process, which is used in biological treatment of organic wastewater, has advantages such as satisfactory treated water quality and simple maintenance, and is widely used in, for example, sewage treatment and industrial wastewater treatment. However, since the BOD volume load in the activated sludge process is about 0.5 to 0.8 kg/m³/d, a large site area is necessary. In addition, since 20% of the decomposed BOD is converted into bacterial cells, that is, sludge, the process has a problem of a large amount of excess sludge treatment.

As a high-load treatment of organic wastewater, a fluidized bed process in which a carrier is added is known. In this process, operation at a BOD volume load of 3 kg/m³/d or more is possible. However, in this process, the amount of generated sludge is about 30% of the decomposed BOD, which is larger than that in the usual activated sludge process and is a disadvantage.

According to Japanese Unexamined Patent Application Publication No. 55-20649, first, organic wastewater is treated with bacteria in a first treatment tank to oxidatively decompose organic substances contained in the wastewater for converting the organic substances to bacterial cells of non-flocculating bacteria. Subsequently, the bacterial cells are removed by predation by sessile protozoa in a second treatment tank, thereby reducing the amount of excess sludge. Furthermore, this process allows a high-load operation and increases treatment efficiency of the activated sludge process.

As wastewater treatment utilizing predation by protozoa or metazoa, which are living organisms higher than bacteria, Japanese Unexamined Patent Application Publication No. 2000-210692 proposes a countermeasure for a degradation of treatment performance caused by a fluctuation in the quality of raw water, which is a problem in the process disclosed in Japanese Unexamined Patent Application Publication No. 55-20649. Specifically, the processes include "the fluctuation in the BOD of water to be treated is controlled within 50% from the median of the average concentration", "the qualities of water in a first treatment tank and first treated water are measured over time", and "when the quality of the first treated water deteriorates, a microbial preparation or seed sludge is added to the first treatment tank".

Japanese Patent Publication No. 60-23832 proposes a method that when, for example, bacteria, yeast, actinomycetes, algae, mold, or primary sedimentation sludge or excess sludge in wastewater treatment are preyed upon by protozoa or metazoa, the floc size of the above bait is reduced so as to be smaller than the mouth of the protozoa or metazoa by ultrasonic treatment or mechanical agitation.

Furthermore, Japanese Patent No. 3410699 proposes a technique relating to a fluidized bed and multistage treatment for an activated sludge process. In this process, the former stage biological treatment is performed by means of a carrier-fluidized bed process and the latter stage biological treatment is performed by means of a multistage activated-sludge process, thereby further reducing the amount of excess sludge generation. In this process, the activated sludge treatment in the latter stage is operated at a low BOD sludge load of 0.1 kg-BOD/kg-MLSS/d, and, thereby, the sludge is auto-oxidation to remarkably reduce the amount of sludge drained.

The above-described multistage activated-sludge process utilizing predation action by animalcules has already been in practical use for the treatment of organic wastewater. In some types of target wastewater, this process can improve treatment efficiency and reduce the amount of sludge generation.

However, although the effect of reduction in the amount of sludge differs depending on process conditions and the quality of the wastewater, the amount of sludge reduced in the process is about half of the amount of sludge that is generated in a single-tank activated sludge process. The causes of this are that, in an animalcule tank used in the latter stage for preying upon sludge that mainly contains bacteria, most of the sludge is not preyed upon and remains, or the animalcules that perform the predation cannot be maintained at a high concentration.

That is, "filter predation animalcules" that participate in the reduction of the amount of sludge in the multistage activated-sludge process suck and prey upon bacteria and, therefore, are good in predation of dispersing bacteria, but are poor in predation of flocculated bacteria. On the other hand, "floc predation animalcules" that gnaw and prey upon bacteria have an effect to improve the reduction of the amount of sludge, but have a disadvantage that the floc is deflocculated to make treated water cloudy and, therefore, have not been used in the multistage activated-sludge stage.

### Disclosure of Invention

It is an object of the present invention to provide a method for biological treatment of organic wastewater, which can further improve treatment efficiency and decrease the amount of excess sludge generation while maintaining stable treated water qualities in a single-tank activated-sludge process or a multistage activated-sludge process using predation action of animalcules.

The method of biological treatment of organic wastewater of the present invention is a biological treatment process of organic wastewater including a biological treatment step for introducing organic wastewater to a biological treatment tank and biologically treating the wastewater and a solid-liquid separation step for solid-liquid separating the treatment liquid in the biological treatment tank into sludge and treated water, and includes a sludge treatment step for introducing a portion of the sludge in the biological treatment tank and/or at least a portion of the sludge separated in the solid-liquid separation step into a sludge treatment tank having a submerged filter element with a pore diameter of 5 to 100 µm in the tank and subjecting the sludge to aerobic biological treatment and a permeated liquid-returning step for returning the liquid permeated through the submerged filter element to the biological treatment tank.

The equipment for biological treatment of organic wastewater of the present invention is biological treatment equipment including a biological treatment tank for biologically treating organic wastewater and solid-liquid separation means for separating treatment liquid in the biological treatment tank into sludge and treated water, and includes a sludge treatment tank having a submerged filter element with a pore diameter of 5 to 100 µm in the tank, introduction means for introducing a portion of the sludge in the biological treatment tank and/or at least a portion of the sludge separated in the solid-liquid separation means into the sludge treatment tank, and permeated liquid-returning means for returning the liquid permeated through the submerged filter element to the biological treatment tank.

### Brief Description of Drawings

[Fig. 1] Fig. 1 is a system diagram illustrating an embodiment of the method and equipment for biological treatment of organic wastewater according to the present invention.
[Fig. 2] Fig. 2 is a system diagram illustrating another embodiment of the method and equipment for biological treatment of organic wastewater according to the present invention.
[Fig. 3] Fig. 3 is a system diagram illustrating another embodiment of the method and equipment for biological treatment of organic wastewater according to the present invention.
[Fig. 4] Fig. 4 is a system diagram illustrating another embodiment of the method and equipment for biological treatment of organic wastewater according to the present invention.

### Detailed Description of the Invention

A method for biological treatment of organic wastewater according to a first aspect has a biological treatment step for introducing organic wastewater to a biological treatment tank for activated sludge treatment, and a solid-liquid separation step for separating biologically treated liquid in the biological treatment tank into sludge and treated water, wherein a portion of the sludge in the biological treatment tank and/or at least a portion of the separated sludge is introduced into a sludge treatment tank having a submerged filter element with a pore diameter of 5 to 100 µm in the tank and is subjected to aerobic biological treatment, and permeated liquid through the submerged filter element is returned to the biological treatment tank.

In the first aspect, a portion of the organic wastewater and/or bacteria cultured with the organic wastewater may be added to the sludge treatment tank.

A method for biological treatment of organic wastewater according to a second aspect has a step for introducing organic wastewater to a first biological treatment tank for biological treatment with bacteria, a step for introducing biologically treated liquid containing the bacteria from the first biological treatment tank to a second biological treatment tank for activated sludge treatment, and a step for solid-liquid separating treated liquid in the second biological treatment tank into sludge and treated water, wherein a portion of the sludge in the second biological treatment tank and/or at least a portion of the separated sludge is introduced into a sludge treatment tank having a submerged filter element with a pore diameter of 5 to 100 µm in the tank for aerobic biological treatment, and permeated liquid through the submerged filter element is returned to the first biological treatment tank and/or the second biological treatment tank.

In the second aspect, a portion of the organic wastewater and/or a portion of the biologically treated liquid in the first biological treatment tank may be added to the sludge treatment tank.

In the first aspect and the second aspect, a nutrient may be added to the sludge treatment tank.

An equipment for biological treatment of organic wastewater according to a third aspect has a biological treatment tank for activated sludge treating organic wastewater, and solid-liquid separation means for separating biologically treated liquid in the biological treatment tank into sludge and treated water, wherein the equipment further has a sludge treatment tank having a submerged filter element with a pore diameter of 5 to 100 µm in the tank, means for introducing a portion of the sludge in the biological treatment tank and/or at least a portion of the separated sludge into the sludge treatment tank, and means for returning the liquid after aerobic biological treatment and permeation through the submerged filter element in the sludge treatment tank to the biological treatment tank.

In the third aspect, the equipment may have means for adding a portion of the organic wastewater and/or bacteria cultured with the organic wastewater to the sludge treatment tank.

An equipment for biological treatment of organic wastewater according to a fourth aspect has a first biological treatment tank for biologically treating organic wastewater with bacteria, a second biological treatment tank for activated sludge treatment for treating liquid containing the bacteria from the first biological treatment tank, and solid-liquid separating means for separating treated liquid in the second biological treatment tank into sludge and treated water, wherein the equipment further has a sludge treatment tank having a submerged filter element with a pore diameter of 5 to 100 µm in the tank, means for introducing a portion of the sludge in the second biological treatment tank and/or at least a portion of the separated sludge into the sludge treatment tank, and means for returning the liquid after aerobic biological treatment and permeation through the submerged filter element in the sludge treatment tank to the first biological treatment tank and/or the second biological treatment tank.

In the fourth aspect, the equipment may have means for adding a portion of the organic wastewater and/or a portion of the treatment liquid in the first biological treatment tank to the sludge treatment tank.

In the third aspect and the fourth aspect, the equipment may have means for adding a nutrient to the sludge treatment tank.

In the method and equipment for biological treatment of organic wastewater according to any of the first to fourth aspects, an improvement in treatment efficiency by higher load operation and a decrease in the amount of excess sludge generation can be achieved, while maintaining stable treated water qualities, in a single-tank activated-sludge process or a multistage activated-sludge process using predation action of animalcules.

That is, in the present invention, both an improvement in the effect of reducing the amount of sludge and an improvement in treated water quality can be simultaneously achieved by separately providing a sludge treatment tank for conducting a reduction in the amount of sludge by animalcules, allowing residual fine components therein to permeate through a submerged filter element disposed in the sludge treatment tank, and returning them to the biological treatment tank for flocculation or predation.

Bacteria that are readily preyed upon by animalcules can be added to the sludge treatment tank by adding a portion of organic wastewater and/or bacteria cultured with organic wastewater to the sludge treatment tank in the single-tank activated sludge process according to the present invention or by adding a portion of organic wastewater and/or a portion of treatment liquid in the first biological treatment tank to the sludge treatment tank in the multistage activated-sludge process according to the present invention, which increases the amount of the animalcules in the sludge treatment tank and achieves stable effect of reduction in the amount of sludge.

Furthermore, in either case, addition of a nutrient to the sludge treatment tank enhances the growth of the animalcules to further increase the effect of reduction in the amount of sludge.

Embodiments of the method and equipment for biological treatment of organic wastewater of the present invention will now be described in detail with reference to the drawings.

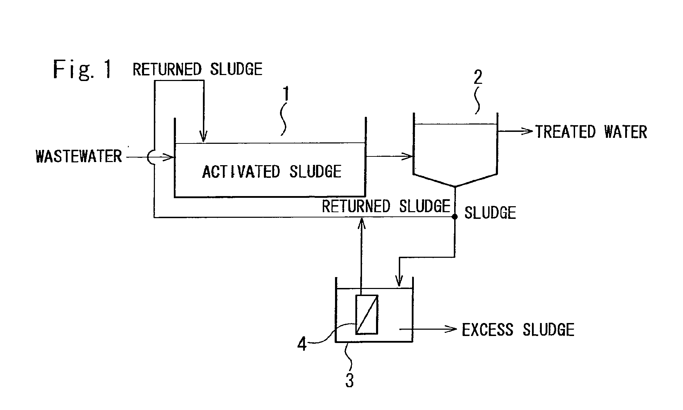

Figs. 1 to 4 are system diagrams illustrating embodiments of the method and equipment for biological treatment of organic wastewater according to the present invention.

In the method shown in Fig. 1, raw water (organic wastewater) is first introduced in a biological treatment tank (activated sludge tank) 1 and is subjected to activated-sludge treatment. The pH of this biological treatment tank 1 is 6 or more and desirably 6 to 8.

After the water is thus treated in the biological treatment tank 1, it is solid-liquid separated in a settlement tank 2, and separated water is discharged to the outside of the system as treated water. A portion of the separated sludge is returned to the biological treatment tank 1, and the residue is discharged to the outside of the system as excess sludge. In Fig. 1, a portion of the separated sludge is fed to a sludge treatment tank 3 and is subjected to aerobic biological treatment for reducing the volume.

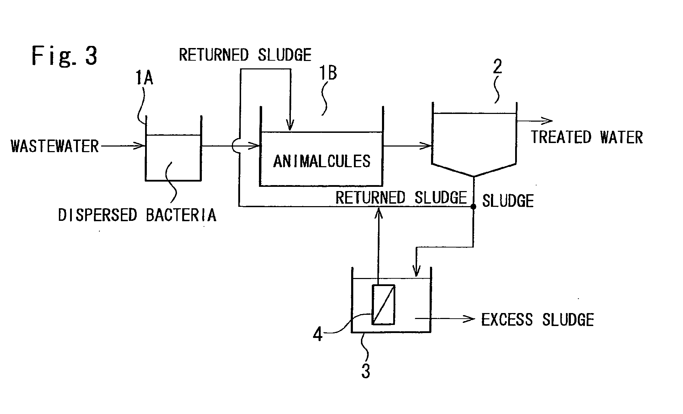

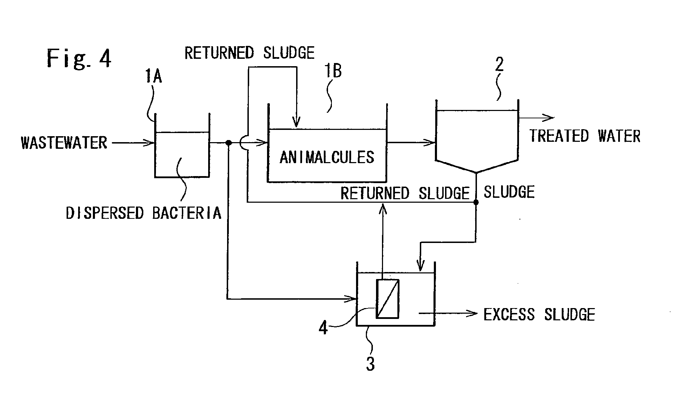

This sludge treatment tank 3 is a membrane-separation-type aerobic treatment tank having a submerged membrane 4. The submerged membrane 4 disposed in the sludge treatment tank 3 has a pore diameter of 5 to 100 µm, preferably about 30 to 100 µm, so as to prevent large size metazoa and floc from passing through, whereas allow pin floc and dispersed bacteria not preyed upon to pass through. The liquid passed through this submerged filter element is returned to the biological treatment tank 1. By doing so, these tanks respectively have different functions: predation and flocculation of dispersed bacteria in the biological treatment tank 1 and predation and deflocculation of flocculated sludge in the sludge treatment tank 3, which can enhance the effect of reduction in the amount of sludge. Accordingly, as shown in Figs. 3 and 4 described below, even in a single-tank activated-sludge treatment not using a dispersed bacteria tank at the pre-stage of the biological treatment tank, the amount of sludge can be reduced by about 50% of that in conventional single-tank activated sludge treatment. The submerged filter element in the sludge treatment tank 3 is not limited membrane, and that such as a plankton net can be used.

In Fig. 1, the amount of the sludge to be fed to the sludge treatment tank 3 from the sludge separated in the settlement tank 2 is suitably determined depending on, for example, the amount of sludge generation and necessary effect of reduction in the amount of sludge. In general, the amount of sludge drawn out from the settlement tank 2 and fed to the sludge treatment tank 3 is equivalent to one fifth to one fortieth of the amount of the sludge in the biological treatment tank 1, and the residue of the separated sludge is returned to the biological treatment tank 1. Excess sludge is properly drawn out from the sludge treatment tank 3.

It is preferable that the liquid permeated through the submerged membrane 4 of the sludge treatment tank 3 be returned to the biological treatment tank 1 such a ratio that the liquid amount in the tank is kept constant.

Since the effect of reduction in the amount of sludge in the sludge treatment tank 3 is due to predation by animalcules, it is preferable for achieving higher effect of reduction in the amount of sludge that the pH of the sludge treatment tank 3 is kept at 6 or less and desirably in the range of 5 to 5.5. Since the sludge treatment tank 3 is a membrane-separation-type aerobic treatment tank having the submerged membrane 4, a high sludge concentration can be maintained, even if the high effect of reduction in the amount of sludge is achieved by adjusting the pH in the sludge treatment tank 3 to this condition.

In Fig. 1, the separated sludge in the settlement tank 2 is drawn out as excess sludge, but the sludge in the sludge treatment tank 3 may be drawn out as excess sludge. In such a case, the amount of excess sludge drawn out is half or less, preferably one fifth or less, of the capacity of the sludge treatment tank 3 per day, and the drawn sludge may be solid-liquid separated, and the separated water may be returned to the biological treatment tank 1. Alternatively, the excess sludge may be drawn out from the biological treatment tank 1. Furthermore, the excess sludge may be drawn out from two or more of these tanks.

Furthermore, the sludge drawn out from the biological treatment tank 1, instead of the separated sludge in the settlement tank 2, may be directly introduced to the sludge treatment tank 3. Alternatively, both the sludge in the biological treatment tank 1 and the separated sludge in the settlement tank 2 may be introduced to the sludge treatment tank 3.

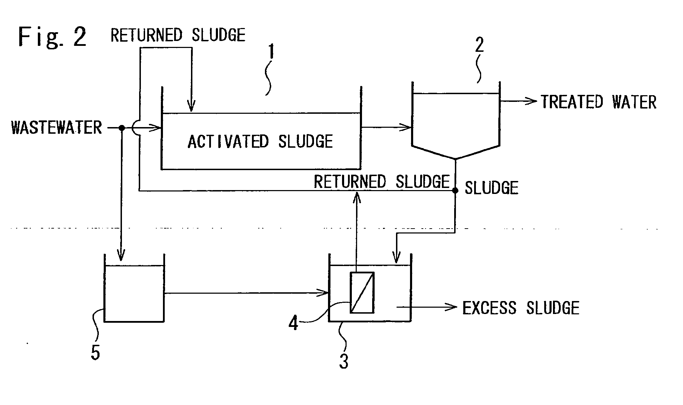

Much of the sludge in the biological treatment tank 1 or the separated sludge in the settlement tank 2 that is introduced to the sludge treatment tank 3 is flocculated, and, thereby, the growth of animalcules that prey upon the sludge in the sludge treatment tank 3 may become slow. Accordingly, as shown in Fig. 2, a culture tank 5 for receiving a portion of organic wastewater and culturing bacteria is provided, and bacteria that are readily preyed upon by animalcules are grown in this culture tank 5. The growth of animalcules in the sludge treatment tank 3 is enhanced by adding the liquid in the culture tank 5 to the sludge treatment tank 3. Thus, the effect of reduction in the amount of sludge can be improved. In such a case, the BOD source to be added to the culture tank 5 may be a portion of the organic wastewater or another synthetic wastewater. The culture tank 5 may be operated by any method that can give treatment liquid in which non-flocculating bacteria are dominant, and the pH, temperature, retention time, and other factors are not limited. In addition, either aerobic treatment or anaerobic treatment may be employed. Furthermore, either continuous cultivation or batch cultivation may be employed. As shown in Fig. 2, the treatment liquid in the culture tank 5 may be directly added to the sludge treatment tank 3. This treatment liquid may be concentrated with, for example, a separation membrane, a centrifuge, or a coagulant separator, and the resulting concentrated liquid may be added. Furthermore, instead of the treatment liquid in the culture tank 5, a portion of the organic wastewater may be directly added to the sludge treatment tank 3, which also can grow bacteria that are readily preyed upon by animalcules growing in the sludge treatment tank 3. Both a portion of the organic wastewater and a portion of the treatment liquid in the culture tank 5 may be added to the sludge treatment tank 3. In any case, the addition amount to the sludge treatment tank 3 is, as COD, preferably 5% or more, in particular, about 5 to 25%, of the COD of sludge (separated sludge in the settlement tank 2 and/or sludge in the biological treatment tank 1) added to the sludge treatment tank.

In Figs. 1 and 2, a carrier may be added to the biological treatment tank 1, or a fluidized bed provided with a carrier may be employed. By doing so, high-load treatment at a BOD volume load of 5 kg/m³/d or more is possible. The biological treatment tank 1 is not limited to an activated-sludge treatment system in which sludge is returned as shown in Fig. 1 or 2 and may be a membrane-separation activated-sludge treatment system. In either case, high-load treatment is possible by adding a carrier in the aeration tank. Furthermore, a plurality of the biological treatment tanks 1 may be disposed in series as a multistage.

The carrier added to the biological treatment tank 1 may have any shape such as a sphere, pellet, hollow tube, or string and have a size of about 0.1 to 10 mm diameter. The carrier may be made of any material such as a natural material, an organic material, or a polymer material. Furthermore, a gel-like material may be used.

The method shown in Fig. 3, first, raw water (organic wastewater) is introduced to a first biological treatment tank (dispersed bacteria tank) 1A, and 70% or more, desirably 80% or more, and more desirably 90% or more of BOD (organic components) is oxidatively decomposed or is converted into bacteria cells of bacteria. The pH of this first biological treatment tank 1A is adjusted to 6 or more and desirably 6 to 8. The BOD volume load on the first biological treatment tank 1A is adjusted to 1 kg/m³/d or more, for example, 1 to 20 kg/m³/d, and HRT (raw water retention time) is adjusted to 24 hours or less, for example, 1 to 24 hours. By doing so, treated water in which non-flocculating bacteria are dominant can be obtained. Furthermore, wastewater with a low BOD concentration can be treated at a high load by reducing the HRT.

The treated water in the first biological treatment tank 1A is introduced to a second biological treatment tank (animalcule tank) 1B where the remaining organic components are oxidatively decomposed, non-flocculating bacteria autolyze, and the amount of sludge is decreased by predation by animalcules. The treatment in this second biological treatment tank 1B is carried out at a pH of 6 or more, preferably, a pH of 6 to 8.

The sludge (animalcule tank sludge) of the second biological treatment tank 1B is periodically exchanged, that is, the SRT (sludge retention time) is constantly controlled to 40 days or less, desirably 30 days or less, and more desirably in the range of 10 to 30 days, in order to thin out animalcules and feces.

When a large amount of organic substances remain in the treatment liquid introduced to the second biological treatment tank 1B from the first biological treatment tank 1A, the oxidative decomposition is performed in the second biological treatment tank 1B. It is known that if organic substances are oxidatively decomposed by bacteria in the second biological treatment tank 1B where a large amount of animalcules present, the bacteria grow in a form that is hardly preyed upon, as an action for escaping from predation by animalcules. Since the bacteria clusters grown in such a form are not preyed upon by animalcules, decomposition of these bacteria is carried out only by autolysis. Therefore, the amount of sludge in the second biological treatment tank 1B or in a sludge treatment tank 3 described below is hardly reduced. Accordingly, as described above, it is preferable that most amount of the organic substances, i.e., 70% or more, desirably 80% or more, of wastewater BOD, be decomposed in the first biological treatment tank 1A to exchange them into bacteria cells. The soluble BOD sludge load on the second biological treatment tank 1B is preferably 0.1 kg-BOD/kg-MLSS/d or less, in particular, 0.35 to 0.71 kg-BOD/kg-MLSS/d or less.

The treatment liquid in the second biological treatment tank 1B is solid-liquid separated in the settlement tank 2, and separated water is discharged to the outside of the system as treated water. A portion of the separated sludge is returned to the second biological treatment tank 1B, and the residue is discharged to the outside of the system as excess sludge. In Fig. 3, a portion of the separated sludge is fed to the sludge treatment tank 3 and is reduced in volume by aerobic biological treatment.

This sludge treatment tank 3 is a membrane-separation-type aerobic treatment tank having a submerged membrane 4, as in those in Figs. 1 and 2. The submerged membrane 4 disposed in the sludge treatment tank 3 has a pore diameter of 5 to 100 µm, preferably about 30 to 100 µm, so as to prevent large size metazoa and floc from passing through, whereas allow pin floc and dispersed bacteria, which have not been preyed upon, to pass through. The liquid passed through this submerged membrane 4 is returned to the second biological treatment tank 1B. By doing so, these tanks respectively have different functions: predation and flocculation of dispersed bacteria in the second biological treatment tank 1B and predation and deflocculation of flocculated sludge in the sludge treatment tank 3, which can enhance the effect of reduction in the amount of sludge. The submerged filter element in the sludge treatment tank 3 is not limited membrane, and that such as a plankton net can be used, as described above.

In Fig. 3, the amount of the sludge to be fed to the sludge treatment tank 3 from the sludge separated in the settlement tank 2 is suitably determined depending on, for example, the amount of sludge generation and necessary effect of reduction in the amount of sludge. In general, the amount of sludge drawn out from the settlement tank 2 and fed to the sludge treatment tank 3 is equivalent to one fifth to one fortieth of the amount of the sludge in the second biological treatment tank 1B, and the residue of the separated sludge is returned to the second biological treatment tank 1B. Excess sludge is properly drawn out from the sludge treatment tank 3.

It is preferable that the liquid permeated through the submerged membrane 4 of the sludge treatment tank 3 be returned to the second biological treatment tank 1B such a ratio that the liquid amount in the tank is kept constant.

Since the effect of reduction in the amount of sludge in the sludge treatment tank 3 is due to predation by animalcules, it is preferable for achieving higher effect of reduction in the amount of sludge that the pH of the sludge treatment tank 3 be kept at 6 or less and desirably in the range of 5 to 5.5. Since the sludge treatment tank 3 is a membrane-separation-type aerobic treatment tank having a submerged membrane 4, a high sludge concentration can be maintained, even if the high effect of reduction in the amount of sludge is achieved by adjusting the pH in the sludge treatment tank 3 to this condition.

In Fig. 3, the separated sludge in the settlement tank 2 is drawn out as excess sludge, but the sludge in the sludge treatment tank 3 may be drawn out as excess sludge. In such a case, the amount of excess sludge drawn out is half or less, preferably one fifth or less, of the capacity of the sludge treatment tank 3 per day, and the drawn sludge may be solid-liquid separated to return the separated water to the first biological treatment tank 1A and/or the second biological treatment tank 1B. Alternatively, the excess sludge may be drawn out from the second biological treatment tank 1B. Furthermore, the excess sludge may be drawn out from two or more of these tanks.

Furthermore, in Fig. 3, the liquid permeated through the submerged membrane 4 of the sludge treatment tank 3 is returned to the second biological treatment tank 1B, but the permeated liquid may be returned to the first biological treatment tank 1A or may be returned to both the first biological treatment tank 1A and the second biological treatment tank 1B. In addition, the sludge drawn out from the second biological treatment tank 1B, instead of the separated sludge in the settlement tank 2, may be directly introduced to the sludge treatment tank 3. Alternatively, both the sludge in the second biological treatment tank 1B and the separated sludge in the settlement tank 2 may be introduced to the sludge treatment tank 3.

Much of the sludge in the second biological treatment tank 1B or the separated sludge in the settlement tank 2 that is introduced to the sludge treatment tank 3 is flocculated, and, thereby, the growth of animalcules that prey upon the sludge in the sludge treatment tank 3 may become slow. Accordingly, as shown in Fig. 4, a portion of the bacteria in the first biological treatment tank 1A that are readily preyed upon by animalcules is added to the sludge treatment tank 3 by introducing the treatment liquid in the first biological treatment tank 1A to the sludge treatment tank 3 to accelerate the growth of the animalcules in the sludge treatment tank 4. Thus, the effect of reduction in the amount of sludge can be improved. In such a case, as shown in Fig. 4, the treatment liquid in the first biological treatment tank 1A may be directly added to the sludge treatment tank 3. This treatment liquid may be concentrated with, for example, a separation membrane, a centrifuge, or a coagulant separator, and the resulting concentrated liquid may be added. Furthermore, instead of the treatment liquid in the first biological treatment tank 1A, a portion of the organic wastewater may be directly added to the sludge treatment tank 3, which also allows bacteria that are readily preyed upon by animalcules growing in the sludge treatment tank 3. Both a portion of the organic wastewater and a portion of the treatment liquid in the first biological treatment tank 1A may be added to the sludge treatment tank 3. In any case, the addition amount to the sludge treatment tank 3 is, as COD, preferably 5% or more, in particular, about 5 to 25% of the COD of sludge added to the sludge treatment tank 3 (separated sludge in the settlement tank 2 and/or sludge in the second biological treatment tank 1B).

In Figs. 3 and 4, in order to conduct high-load treatment in the first biological treatment tank 1A, a portion of the separated sludge in the settlement tank 2 serving as the latter stage may be returned to the first biological treatment tank 1A, or multi-stage treatment may be carried out by using two or more biological treatment tanks disposed in series as the first biological treatment tank 1A. Furthermore, a carrier may be added to the first biological treatment tank 1A, or a fluidized bed provided with a carrier may be employed, or a plurality of the first biological treatment tanks 1A may be disposed in series as a multistage. By doing so, high-load treatment at a BOD volume load of 5 kg/m³/d or more is also possible.

Since action of animalcules, which are slow in growth compared to bacteria, and autolysis of bacteria are utilized in the second biological treatment tank 1B, it is important to employ operation conditions and treatment equipment such that the animalcules and bacteria remain in the system. Accordingly, as shown in Figs. 3 and 4, the second biological treatment tank 1B preferably employs an activated-sludge treatment system or a membrane-separation activated-sludge treatment system in which sludge is returned. In such a case, the retention amount of animalcules in a tank can be increased by adding a carrier in the aeration tank.

The carrier added to the first biological treatment tank 1A or the second biological treatment tank 1B may have any shape such as a sphere, pellet, hollow tube, or string and have a size of about 0.1 to 10 mm diameter. The carrier may be made of any material such as a natural material, an organic material, or a polymer material. Furthermore, a gel-like material may be used.

In the present invention, it is preferable for further enhancing the effect of reduction in the amount of sludge that nutrients that can accelerate the growth of metazoa, such as phospholipid, free fatty acid, lysophospholipid, sterol, or lecithin containing the same, carbohydrate solution, rice bran, beer trash, vegetable oil trash, sugar beet trash, shell powder, egg shell, vegetable extract, fish extract, various amino acids, and various vitamins, are added alone or in a mixture of two or more thereof to the sludge treatment tank 3 where the amount of sludge is reduced. The addition amount of such a nutrient is not particularly limited, but it is preferable that the nutrient is added once every one to seven days such that the concentration in the sludge treatment tank immediately after the addition of the nutrient is about 0.01 to 100 mg/L. A smaller amount of nutrient cannot achieve sufficient effect by the addition, and a larger amount of nutrient leads to inhibition of animalcules and an increase in the amount of sludge generation.

In the present invention, since excess sludge drawn out to the outside of the system contains animalcules at a high ratio, the excess sludge can be further reduced in the volume by providing an excess sludge treatment tank for treating the drawn excess sludge for readily solubilizing the sludge by anaerobic treatment, physical treatment, or chemical treatment or any combination thereof and by returning the solubilized sludge to either the biological treatment tank (the first biological treatment tank and/or the second biological treatment tank in the two-stage activated-sludge process) or the sludge treatment tank. Examples

The present invention will now be described more specifically with reference to Examples and Comparative Examples.

### Example 1

As shown in Fig. 3, using laboratory equipment including a first biological treatment tank (activated sludge tank (not returning sludge)) 1A with a capacity of 3.6 L, a second biological treatment tank (activated sludge tank) 1B with a capacity of 15 L, a settlement tank 2, and a sludge treatment tank 3 with a capacity of 3 L that were connected, organic wastewater was treated according to the present invention. A submerged membrane 4 with a pore diameter of 10 µm was provided inside the sludge treatment tank 3. The pH of the first biological treatment tank 1A and the second biological treatment tank 1B was adjusted to 6.8, and the pH of the sludge treatment tank 3 was adjusted to 5.0. The separated sludge in the settlement tank 2 was fed to the sludge treatment tank 3 at a rate of 0.5 L/d, and the residue was returned to the second biological treatment tank 1B. Excess sludge was drawn from the sludge treatment tank 3 at a rate of 0.2 L/d, and 0.3 L/d of permeated liquid was fed to the second biological treatment tank 1B through the submerged membrane 4. Lecithin, as a nutrient, was added to the sludge treatment tank 3 once a day such that the concentration in the tank immediately after the addition was 1 mg/L. The operation was carried out under conditions: a soluble BOD volume load to the first biological treatment tank 1A of 3.85 kg-BOD/m³/d for an HRT of 4 hours, a soluble BOD sludge load to the second biological treatment tank 1B of 0.022 kg-BOD/kg-MLSS/d for an HRT of 17 hours, a SRT of 15 days, and a BOD volume load in total of 0.75 kg-BOD/m³/d for an HRT of 21 hours.

After continuous operation under the above conditions for one month, the sludge conversion rate was 0.10 kg-MLSS/kg-BOD. The BOD of the treated water (supernatant flew out from the settlement tank 2) was lower than the detection limit.

### Example 2

As shown in Fig. 1, using laboratory equipment including a biological treatment tank (activated sludge tank) 1 with a capacity of 15 L, a settlement tank 2, and a sludge treatment tank 3 with a capacity of 3 L that were connected, organic wastewater was treated according to the present invention. A submerged membrane 4 with a pore diameter of 10 µm was provided inside the sludge treatment tank 3. The pH of the biological treatment tank was adjusted to 6.8, and the pH of the sludge treatment tank 3 was adjusted to 5.0. The separated sludge in the settlement tank 2 was fed to the sludge treatment tank 3 at a rate of 0.5 L/d, and the residue was returned to the biological treatment tank 1. Excess sludge was drawn from the sludge treatment tank 3 at a rate of 0.36 L/d, and 0.14 L/d of permeated liquid was fed to the biological treatment tank 1 through the submerged membrane 4. Lecithin, as a nutrient, was added to the sludge treatment tank 3 once a day such that the concentration in the tank immediately after the addition was 1 mg/L. The operation was carried out under conditions that a soluble BOD volume load of 0.76 kg-BOD/m³/d was applied to the biological treatment tank 1 for an HRT of 20 hours.

After continuous operation under the above conditions for one month, the sludge conversion rate was 0.18 kg-MLSS/kg-BOD. The BOD of the treated water (supernatant flew out from the settlement tank 2) was lower than the detection limit.

### Example 3

Treatment was carried out as in Example 1 under the same conditions except that a portion of the treatment liquid in the first biological treatment tank 1A was concentrated by centrifugation at a 12000 rpm for 5 minutes, and the concentrated liquid was added to the sludge treatment tank 3 at a rate of 105 mg-COD/d (5% of the COD of the separated sludge added to the sludge treatment tank 3), wherein the diluted liquid generated by the concentration was fed to the second biological treatment tank 1B. The sludge conversion rate was 0.08 kg-MLSS/kg-BOD. The BOD of the treated water (supernatant flew out from the settlement tank 2) was lower than the detection limit.

### Comparative Example 1

The laboratory equipment in Example 2 except the sludge treatment tank 3 was operated continuously for one month under the conditions of the same soluble BOD volume load to the biological treatment tank 1 and HRT. Though the treated water was satisfactory, the sludge conversion rate was 0.40 kg-MLSS/kg-BOD.

### Comparative Example 2

The laboratory equipment in Example 1 except the sludge treatment tank 3 was operated continuously for one month under the conditions of the same soluble BOD volume loads to the first biological treatment tank 1A and the second biological treatment tank 1B and HRT and the same total BOD volume load total and HRT. Though the treated water was satisfactory, the sludge conversion rate was 0.20 kg-MLSS/kg-BOD.

The above results reveal the followings:
A conventional single-tank activated-sludge process was carried out in Comparative Example 1, and a conventional two-stage biological treatment process was carried out in Comparative Example 2. Though the sludge conversion rate in the conventional activated-sludge process (Comparative Example 1) was 0.40 kg-MLSS/kg-BOD, the sludge conversion rate was decreased to 0.20 kg-MLSS/kg-BOD by introducing the two-stage biological treatment as in Comparative Example 2. Thus, the amount of sludge generation could be decreased by half. This effect of reduction in the amount of sludge was approximately the same as those in the two-stage biological treatment processes that have been already reported.

On the other hand, in Examples 1 to 3, the sludge conversion rates were 0.10, 0.18, and 0.08 kg-MLSS/kg-BOD, respectively. Thus, the amounts of sludge generation were remarkably decreased compared to the conventional processes. In particular, in Example 3 wherein the sludge treatment tank 3 was provided and a portion of the treatment liquid in the first biological treatment tank 1A was added to the sludge treatment tank 3, the amount of the sludge could be decreased to one fifth of that in the conventional process.

The present invention has been described in detail using with specific embodiments, but it is obvious to those skilled in the art that the present invention can be variously modified within the spirit and the scope of the present invention.
The present application is based on Japanese Patent Application (Patent Application No. 2005-066021) filed on March 9, 2005, the entire disclosure of which is hereby incorporated by reference.

## Claims

1. A method of biological treatment of organic wastewater, comprising:
a biological treatment step for introducing organic wastewater to a biological treatment tank and biologically treating the organic wastewater; and
a solid-liquid separation step for separating biologically treated liquid in the biological treatment tank into sludge and treated water,
wherein said method further comprises:
a sludge treatment step for introducing a portion of the sludge in the biological treatment tank and/or at least a portion of the sludge separated in the solid-liquid separation step into a sludge treatment tank having a submerged filter element with a pore diameter of 5 to 100 µm in the tank and subjecting the sludge to aerobic biological treatment; and
a permeated liquid-returning step for returning the liquid permeated through the submerged filter element to the biological treatment tank.

2. The method of biological treatment of organic wastewater according to Claim 1, wherein a portion of the organic wastewater and/or bacteria cultured with the organic wastewater is added to the sludge treatment tank.

3. The method of biological treatment of organic wastewater according to Claim 1, wherein the biological treatment step comprises a step for introducing the organic wastewater to the biological treatment tank containing activated sludge and treating the wastewater by the activated-sludge.

4. The method of biological treatment of organic wastewater according to Claim 1, wherein the biological treatment step comprises:
a first biological treatment step for introducing organic wastewater to a first biological treatment tank containing bacteria and biologically treating the organic wastewater by the bacteria; and
a second biological treatment step for introducing biologically treated liquid containing bacteria from the first biological treatment tank to a second biological treatment tank and treating the liquid by activated-sludge;
the treated liquid in the second biological treatment tank being fed to the solid-liquid separation step.

5. The method of biological treatment of organic wastewater according to Claim 4, wherein the permeated liquid through the submerged filter element is returned to the first biological treatment tank and/or the second biological treatment tank in the permeated liquid-returning step.

6. The method of biological treatment of organic wastewater according to Claim 5, wherein a portion of the organic wastewater and/or a portion of the treatment liquid in the first biological treatment tank is added to the sludge treatment tank.

7. The method of biological treatment of organic wastewater according to Claim 1, wherein a nutrient is added to the sludge treatment tank.

8. The method of biological treatment of organic wastewater according to Claim 7, wherein the nutrient is at least one of nutrients that can accelerate the growth of metazoa, such as phospholipid, free fatty acid, lysophospholipid, sterol, or lecithin containing the same, carbohydrate solution, rice bran, beer trash, vegetable oil trash, sugar beet trash, shell powder, egg shell, vegetable extract, fish extract, various amino acids, and various vitamins.

9. Equipment for biological treatment of organic wastewater, comprising:
a biological treatment tank for biologically treating organic wastewater; and
solid-liquid separation means for separating treated liquid in the biological treatment tank into sludge and treated water,
wherein the equipment further comprising:
a sludge treatment tank including a submerged filter element having a pore diameter of 5 to 100 µm in the tank;
introduction means for introducing a portion of the sludge in the biological treatment tank and/or at least a portion of the sludge separated in the solid-liquid separation means into the sludge treatment tank; and
permeated liquid-returning means for returning the liquid permeated through the submerged filter element to the biological treatment tank.

10. The equipment for biological treatment of organic wastewater according to Claim 9, further comprising means for adding a portion of the organic wastewater and/or bacteria cultured with the organic wastewater to the sludge treatment tank.

11. The equipment for biological treatment of organic wastewater according to Claim 9, wherein the biological treatment tank is a biological treatment tank containing activated sludge.

12. The equipment for biological treatment of organic wastewater according to Claim 9, wherein
the biological treatment tank comprises a first biological treatment tank containing bacteria and for biologically treating organic wastewater with the bacteria and a second biological treatment tank for activated-sludge treatment for treating the liquid containing bacteria from the first biological treatment tank; and
the introduction means supplies the treated liquid in the second biological treatment tank to the solid-liquid separation means.

13. The equipment for biological treatment of organic wastewater according to Claim 12, wherein the permeated liquid-returning means returns the liquid permeated through the submerged filter element to the first biological treatment tank and/or the second biological treatment tank.

14. The equipment for biological treatment of organic wastewater according to Claim 13, further comprising means for adding a portion of the organic wastewater and/or a portion of the treatment liquid in the first biological treatment tank to the sludge treatment tank.

15. The equipment for biological treatment of organic wastewater according to Claim 9, further comprising means for adding a nutrient to the sludge treatment tank.
